(19) Europäisches Patentamt
European Patent Office
Office européen des brevets

(11) **EP 2 048 873 A1**

(12) **EUROPEAN PATENT APPLICATION**

(43) Date of publication:
**15.04.2009 Bulletin 2009/16**

(51) Int Cl.:
*H04N 5/21* (2006.01)   *H04N 5/44* (2006.01)
*H04N 7/01* (2006.01)

(21) Application number: **08162072.6**

(22) Date of filing: **08.08.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **11.10.2007 KR 20070102504**

(71) Applicant: **Samsung Electronics Co., Ltd.**
**Suwon-si,**
**Gyeonggi-do 442-742 (KR)**

(72) Inventors:
• **Lee, Ho-seop**
  **Seoul (KR)**
• **Min, Jong-sul**
  **Gyeonggi-do (KR)**

(74) Representative: **Clark, David James**
**Appleyard Lees**
**15 Clare Road**
**Halifax**
**HX1 2HY (GB)**

(54) **Image signal processor and method thereof**

(57) An image signal processor and a method thereof are provided. The image signal processor (98) includes pattern generating unit (107) which divides subfields of a frame of a received image signal into a first group of subfields and a second group of subfields having a symmetrical pattern with one another, and a pattern moving unit (109) which moves the pattern of one of the first group of subfields and the second group of subfields, and outputs the moved pattern.

FIG. 3A

## Description

## BACKGROUND OF THE INVENTION

### 1. Field of the Invention

Apparatuses and methods consistent with the present invention relate to processing images, and more particularly, to processing a phase alternation by line (PAL) system image signal for a display on a plasma display panel (PDP).

### 2. Description of the Related Art

A related art method for displaying a phase alternation by line system image signal on a plasma display panel (PDP) uses a pseudo 100 Hz driving scheme, or 100 Hz or 75 Hz driving scheme that adopts the frame rate conversion.

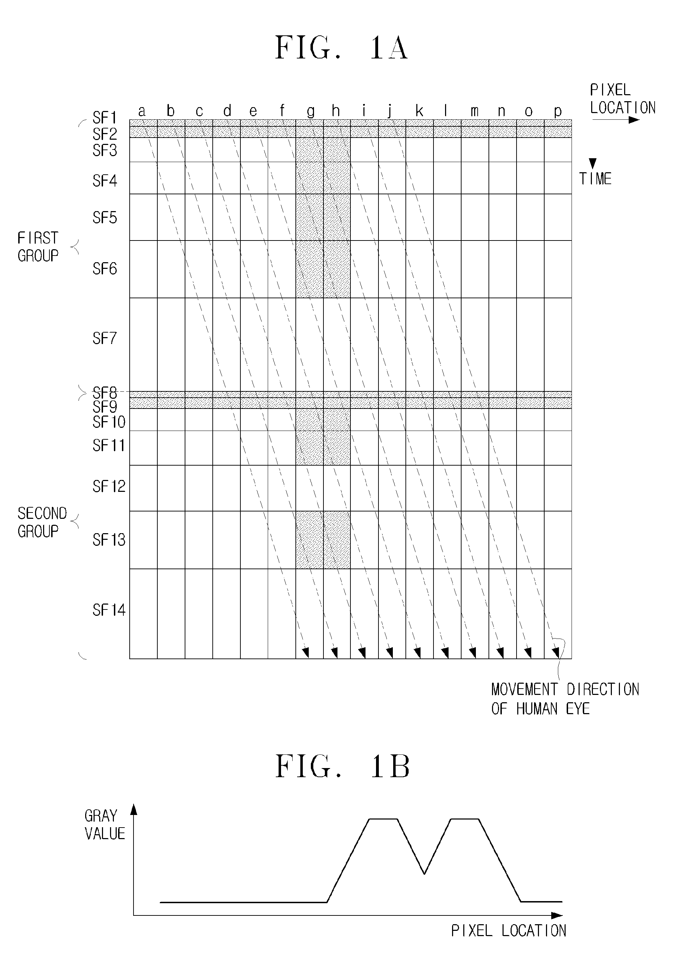

Referring to FIG. 1A, the pseudo 100 Hz driving scheme relates to dividing the subfields (SF1, SF2, ..., SF14) into a first group (SF1, SF2, ..., SF7) and a second group (SF8, SF9, ..., SF14), and causing the first and second groups to illuminate in a similar pattern so that the flicker may be decreased. While the pseudo 100 Hz driving scheme reduces flicker, it produces a double edge phenomenon.

As illustrated in FIG. 1A, pixels a, b, c, d, e, f, i, j, ..., p have relatively darker gray values, while pixels g and h have the brighter gray values. Due to a limited range of human eye movement, the pixels g and h are recognized to be in the brightness as illustrated in FIG. 1B, which means a blurry movement occurs in the image. The vertical axis represents gray values, and horizontal axis represents the location of the pixels.

Meanwhile, in the driving scheme that adopts the frame rate conversion converts 50 Hz into 100 Hz, the driving time decreases by half and the number of subfields also decreases. Accordingly, the number of available gray values decreases, requiring more operations such as an error diffusion or dithering. As a result, more severe noise may be generated.

## SUMMARY OF THE INVENTION

Exemplary embodiments of the present invention aim to overcome the above problems and/or disadvantages and other disadvantages not described above.

Exemplary embodiments of the present invention provide an image signal processor and a method thereof for displaying a PAL image signal, capable of improving quality degradation due to flicker and double edge, and preventing noise due to changes in the number of gray values, by moving the location of the illuminating pattern without reducing the number of gray values.

According to an aspect of the present invention, there is provided an image signal processor, including: a pattern generating unit which divides subfields of a frame of a received image signal into a first group of subfields and a second group of subfields having a symmetrical pattern with one another, and a pattern moving unit which moves one of the pattern of the first group of subfields and the second group of subfields and outputs the moved pattern.

The pattern moving unit suitably moves the pattern of the first group subfields in a first direction based on a motion vector of the received image signal.

The first direction is suitably opposite to the movement direction of a human eye.

The pattern moving unit suitably moves the pattern of the second group subfields in a second direction based on a motion vector of the received image signal.

The second direction suitably coincides with the movement direction of a human eye.

The pattern moving unit suitably moves the pattern of the first group subfields or the second group subfields by a half size of a motion vector of the received image signal.

The pattern moving unit suitably moves the pattern of the first group subfields or the second group subfields based on a degree of movement computed by:

$$m = t * v$$

where m denotes the degree of movement, v denotes the motion vector of received RGB image signal, and t denotes the physical time when the second group starts in one frame.

The image signal processor may further include a delay unit which delays the received image signal by one frame and outputs the result, and a motion estimation unit which estimates a motion vector between previous and current frames using the pixel values of the previous frame output from the delay unit and the pixel values of the current frame.

The image signal processor may further include a reverse gamma compensation unit which performs a reverse gamma compensation of the received image signal and provides the pattern generating unit with the result, and a driving unit which drives a PDP to display the image signal in which the pattern is moved by the pattern moving unit.

The image signal processor may be implemented as a broadcast receiving apparatus which receives and processes a red/green/blue (RGB) image included in a PAL system broadcast signal.

According to another aspect of the present invention, there is provided an image signal processing method, including: dividing subfields of a frame of a received image signal into a first group of subfields and a second group of subfields having a symmetrical pattern with one another; moving the pattern of one of the first group of subfields and the second group of subfields; and outputting the moved pattern.

The moving may include moving the pattern of the first group subfields in a first direction based on a motion vector of the received image signal.

The first direction is suitably opposite to the movement direction of a human eye.

The moving may include moving the pattern of the second group subfields in a second direction based on a motion vector of the received image signal.

The second direction suitably coincides with the movement direction of human eye.

The moving may include moving the pattern of the first group subfields or the second group subfields by a half size of a motion vector of the received image signal.

The moving may include moving the pattern of the first group subfields or the second group subfields based on a degree of movement computed by:

$$m = t * v$$

where m denotes the degree of movement, v denotes motion vector of received RGB image signal, and t denotes the physical time when the second group starts in one frame.

The image signal processing method may further include delaying the received image signal by one frame and outputting the result, and estimating a motion vector between previous and current frames using the pixel values of the previous and current frames.

The image signal processing method may further include performing a reverse gamma compensation of the received image signal and providing the result, and driving a PDP to display the image signal in which the pattern is moved.

The image signal may be implemented as a red/green/blue (RGB) image included in a PAL system broadcast signal.

According to the present invention there is provided an apparatus and method as set forth in the appended claims. Other features of the invention will be apparent from the dependent claims, and the description which follows.

**BRIEF DESCRIPTION OF THE DRAWINGS**

The above and other aspects of the present invention will be more apparent from the following detailed description of exemplary embodiments with reference to the accompanying drawings, in which:

FIG. 1A illustrates the related art pseudo 100 Hz driving scheme;
FIG 1B illustrates gray level distribution for the pixels of FIG. 1A;
FIG. 2 is a block diagram of an image signal processor according to an exemplary embodiment of the present invention;

FIG. 3A illustrates a driving scheme according to an exemplary embodiment of the present invention;
FIG. 3B illustrates gray level distribution for the pixels of FIG. 3A; and
FIG. 4 is a flowchart illustrating a method for operating an image signal processor according to an exemplary embodiment of the present invention.

**DETAILED DESCRIPTION OF EXEMPLARY EMBODIMENTS**

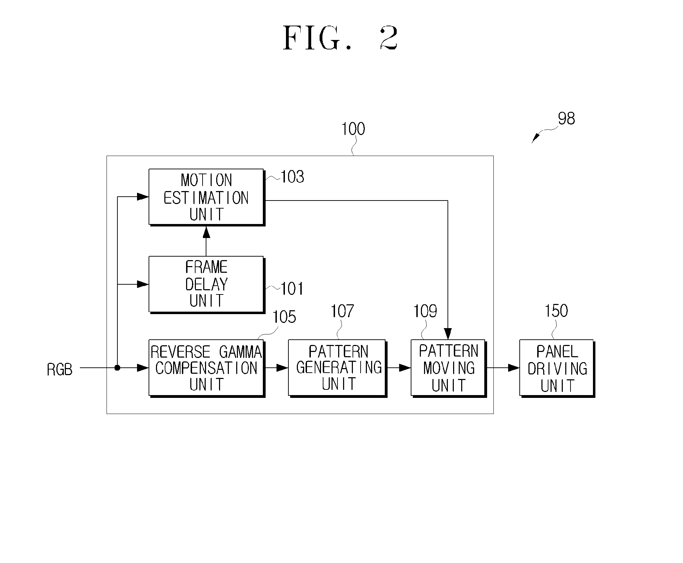

FIG. 2 is a block diagram of an image signal processor according to an exemplary embodiment of the present invention.

Referring to FIG. 2, the image signal processor 98 according to the exemplary embodiment of the present invention includes an image signal processing unit 100 and a panel driving unit 150.

The image signal processing unit 100 processes a received red/green/blue (RGB) image signal for image enhancement, and outputs the result. The image signal processing unit 100 includes a frame delay unit 101, a motion estimation unit 103, a reverse gamma compensation unit 105, a pattern generating unit 107, and a pattern moving unit 109.

The frame delay unit 101 includes a memory to store the received RGB image signal. The RGB image signals are delayed by one frame in the frame delay unit 101 and thus are output as the previous frame.

The motion compensation unit 103 estimates the motion vector between the previous and current frames using the pixel values of the previous and current frames, and outputs the result.

The reverse gamma compensation unit 105 performs reverse gamma compensation of the RGB image signal and outputs the result. The reverse gamma compensation unit 105 compensates the gray values so that the brightness of the received RGB image signal is in a linear relation with the perceived brightness.

The pattern generating unit 107 divides the subfields of one frame of the RGB image signal into first and second groups which have a symmetrical pattern with each other, and outputs the result.

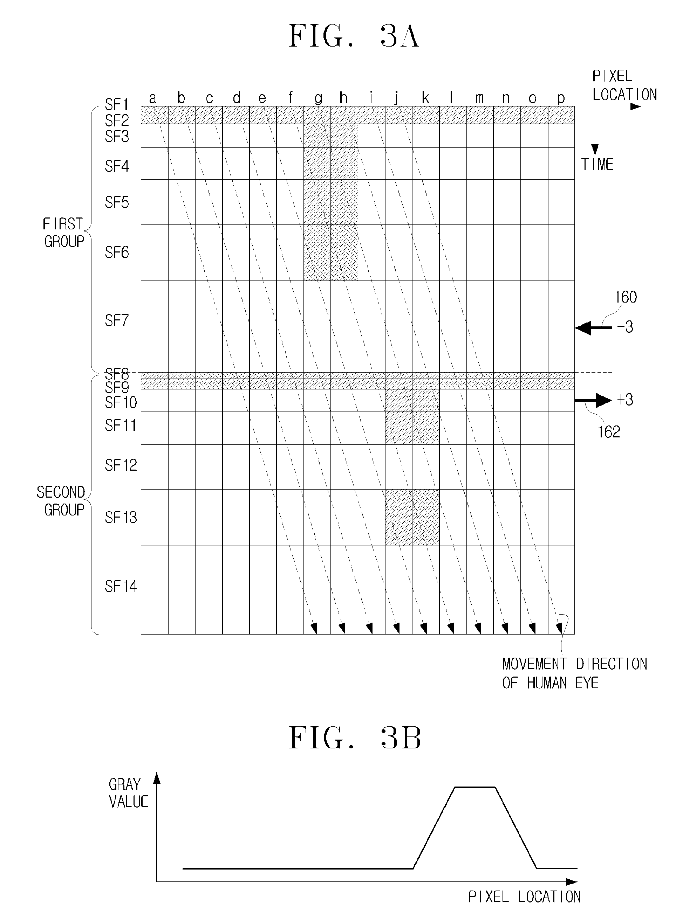

Referring to FIG. 3A, the subfields SF1, SF2, ..., SF14 of one frame are divided into a first group including subfields SF1, SF2, ..., SF7, and a second group including subfields SF8, SF9, ..., SF14. The patterns are generated and represented in a symmetrical relation with each other between the subfields of the first and second groups. In other words, the subfields SF1, SF2, ..., SF7 of the first group represent the similar illumination pattern as that of the subfields SF8, SF9, ..., SF14 of the second group.

The pattern moving unit 109 moves the pattern of the first group subfields SF1, SF2, ..., SF7, or the second group subfields SF8, SF9, ..., SF14 based on the motion vector output from the motion estimation unit 103.

As shown in FIG. 3A, the pattern of the first group subfields SF1, SF2, ..., SF7 may be moved in a first direction 160 opposite to the movement direction of human eye. The pattern of the second group subfields SF8, SF9, ..., SF14 may be moved in a second direction 162 coincidental to (towards) the movement direction of human eye. FIG. 3A illustrates human eye moving rightward of the image.

The pattern moving unit 109 may move the pattern of the first group subfields SF1, SF2, ..., SF7, or the pattern of the second group subfields SF8, SF9, ..., SF14 according to the degree of movement computed by Equation 1:

$$m = v/2 \qquad (1)$$

where m denotes the degree of movement, and v denotes a length in pixels of the motion vector of the received RGB image signal.

According to Equation 1, the pattern moving unit 109 moves the pattern of the first group subfields SF1, SF2, ..., SF7 or the pattern of the second group subfields SF8, SF9, ..., SF14 by a half of the motion vector. In the example of FIG. 3A, the motion vector length is six (6) pixels between the previous and current frames. The degree of movement is equal to 6/2 = 3 pixels. Accordingly, the pattern moving unit 109 moves the pattern of the first group subfields SF1, SF2, ..., SF7 by -3 pixels, that is, by three (3) pixels opposite to the movement direction of human eye. Alternatively, the pattern moving unit 109 may move the pattern of the second group subfields SF8, SF9, ..., SF14 by +3 pixels, that is, by three (3) pixels coincidental to the movement direction of human eye.

Alternatively, the pattern moving unit 109 may move the pattern of the first group subfields SF1, SF2, ..., SF7 or the pattern of the second group subfields SF8, SF9, ..., SF14 according to the degree of movement computed by Equation 2:

$$m = t * v \qquad (2)$$

where m denotes the degree of movement, v denotes a length in pixels of the motion vector of received RGB image signal, and t denotes the physical time when the second group starts in one frame.

The physical time may be measured and stored in the pattern moving unit 109 as a fixed value.

For example, if the physical time that the second group starts is 0.6 of one frame, the degree of movement is 0.6 *6 = 3.6 pixels. Therefore, the pattern moving unit 109 moves the pattern of the first group subfields SF1, SF2, ..., SF7 by - 3.6 pixels, that is, by 3.6 pixels opposite to the movement direction of human eye. Alternatively, the pattern moving unit 109 may move the pattern of the second group subfields SF8, SF9, ..., SF14 by + 3.6 pixels, that is, by 3.6 pixels coincidental to the movement direction of human eye.

As explained above, the pattern moving unit 109 moves the pattern of the first group subfields SF1, SF2, ..., SF7 or the pattern of the second group subfields SF8, SF9, ..., SF14 based on the motion vector.

As a result of moving the pattern, the gray values of the pixels g and h of the first group are given to the pixels j and k of the second group.

As a result, the patterns of the first and second group subfields are aligned to the movement direction of human eye by the pattern moving unit 109, and image degradation such as double edge is not generated (FIG. 3B). In FIG. 3B, the vertical axis represents the gray values, and the horizontal axis represents the locations of the pixels.

The panel driving unit 150 drives a PDP to display the image signal output from the image signal processing unit 100.

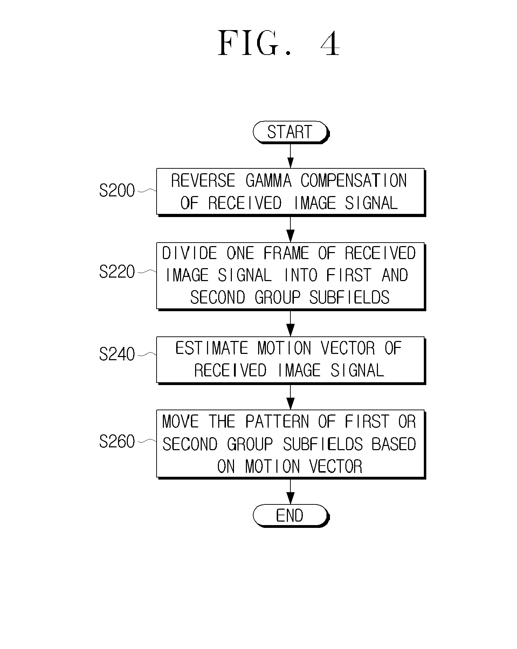

FIG. 4 is a flowchart to explain the operations of an image signal processor according to an exemplary embodiment of the present invention.

Referring to FIG. 4, the reverse gamma compensation unit 105 in operation S200 performs reverse gamma compensation of an RGB image signal received by the image signal processing unit 106 and outputs the result. In operation S220, the pattern generating unit 107 divides one frame of the received image signal into a first group subfields and a second group subfields. The pattern generating unit 107 uses the pseudo 100 Hz driving scheme to divide the subfields of one frame of the RGB image signal into the first group subfields and the second group subfields that have the symmetric pattern to each other, and outputs the result.

In operation S240, the motion estimation unit 103 estimates the motion vectors of the received image signal. The motion estimation unit 103 estimates the motion vector between the current frame and the previous frame output from the frame delay unit 101, and outputs the result. In operation S260, the pattern moving unit 109 moves the pattern of one of the first group subfields and the second group subfields based on the motion vector.

Specifically, if the image moves rightward, the pattern moving unit 109 moves the pattern of the first group subfields SF1, SF2, ..., SF7 opposite to the movement direction of human eye, or alternatively, moves the pattern of the second group subfields SF8, SF9, ..., SF14 coincidental to the movement direction of the human eye. The pattern moving unit 109 may move the pattern of the first group subfields SF1, SF2, ..., SF7 or the pattern of the second group subfields SF8, SF9, ..., SF14 by a half of the motion vector size, or by the motion vector size multiplied by the physical time at which the second group begins.

As described above, image degradation such as double edge is prevented, since the pattern moving unit 109 moves the pattern of the first group subfields SF1, SF2, ..., SF7 or the second group subfields SF8, SF9, ..., SF14 based on the motion vector size.

While the image signal processor 98 described above includes the image signal processing unit 100 and the panel driving unit 150, this should not be construed as limiting. The image signal processor 98 according to an exemplary embodiment of the present invention may be implemented as a broadcast receiving apparatus which receives and processes an image signal included in a broadcast transmitted from a broadcast station. Furthermore, one will understand that the concept of the present invention is not limited to the example of image enhancement of the PAL image signal described above.

According to exemplary embodiments of the present invention, by moving the location of the illuminating pattern using the pseudo 100 Hz driving scheme, flicker or double edge may be eliminated. Furthermore, since the images are displayed without reducing the number of gray values, noise due to changes of gray values does not occur. The PAL image signal may be displayed with high resolution.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. An image signal processor (98) comprising:

a pattern generating unit (107) which divides subfields of a frame of a received image signal into a first group of subfields and a second group of subfields having a symmetrical pattern with one another; and
a pattern moving unit (109) which moves the pattern of one of the first group of subfields and the second group of subfields and outputs the moved pattern.

2. The image signal processor of claim 1, wherein the pattern moving unit (109) moves the pattern of the first group of subfields in a first direction or the pattern of the second group of subfields in a second direction based on a motion vector of the received image signal.

3. The image signal processor of claim 2, wherein the first direction is opposite to a movement direction of a human eye and the second direction coincides with a movement direction of the human eye.

4. The image signal processor of claim 1, 2 or 3, wherein the pattern moving unit (109) moves the pattern of one of the first group of subfields and the second group of subfields by a half of a size of a motion vector of the received image signal.

5. The image signal processor of any preceding claim, wherein the pattern moving unit (109) moves the pattern of one of the first group of subfields and the second group of subfields based on a degree of movement computed by:

$$m = t * v$$

where m denotes the degree of movement,
v denotes a size of the motion vector of the received image signal, and
t denotes a physical time when the second group of subfields starts in a frame.

6. The image signal processor of any preceding claim, further comprising:

a delay unit (101) which delays the received image signal by one frame; and
a motion estimation unit (103) which estimates a motion vector between the delayed frame and a current frame using the pixel values of the delayed frame output from the delay unit and the pixel values of the current frame.

7. The image signal processor of any preceding claim, further comprising:

a reverse gamma compensation unit (105) which performs a reverse gamma compensation of the received image signal and provides the pattern generating unit (107) with the result; and a driving unit (150) which drives a plasma display panel to display the image signal in which the pattern is moved by the pattern moving unit (109).

**8.** A broadcast receiving apparatus which receives and processes a red, green, blue image included in a phase alternation by line system broadcast signal, the apparatus comprising the image signal processor (98) of claim 1.

**9.** An image signal processing method comprising:

dividing subfields of a frame of a received image signal into a first group of subfields and a second group of subfields having a symmetrical pattern with one another (S220);
moving the pattern of one of the first group of subfields and the second group of subfields (S260); and
outputting the moved pattern.

**10.** The image signal processing method of claim 9, wherein the moving comprises:

moving the pattern of the first group of subfields in a first direction or the pattern of the second group of subfields in a second direction based on a size of a motion vector of the received image signal.

**11.** The image signal processing method of claim 10, wherein the first direction is opposite to a movement direction of a human eye and the second direction coincides with a movement direction of the human eye.

**12.** The image signal processing method of claim 9 or 10, wherein the moving comprises:

moving the pattern of one of the first group of subfields and the second group of subfields by a half of a size of a motion vector of the received image signal.

**13.** The image signal processing method of any one of claims 9-12, wherein the moving comprises:

moving the pattern of one of the first group of subfields and the second group of subfields based on a degree of movement computed by:

$$m = t * v$$

where m denotes the degree of movement,
v denotes a size of a motion vector of the received image signal, and
t denotes a physical time when the second group of subfields starts in a frame.

**14.** The image signal processing method of any one of claims 9-13, further comprising:

delaying the received image signal by one frame; and
estimating a motion vector between the delayed frame and a current frame using pixel values of the delayed and current frames.

**15.** The image signal processing method of any one of claims 9-14, further comprising:

prior to generating the patterns, performing a reverse gamma compensation of the received image signal (S200);
dividing the subfields of the frame comprising compensated pixel values (S220); and
driving a plasma display panel to display the image signal in which the pattern is moved.

# FIG. 1A

PIXEL LOCATION

SF1 ... SF14

a b c d e f g h i j k l m n o p

TIME

FIRST GROUP

SECOND GROUP

MOVEMENT DIRECTION OF HUMAN EYE

# FIG. 1B

GRAY VALUE

PIXEL LOCATION

# FIG. 2

# FIG. 3A

# FIG. 3B

# FIG. 4

```
              ( START )
                  │
                  ▼
S200 ┌─────────────────────────────┐
     │  REVERSE GAMMA COMPENSATION │
     │   OF RECEIVED IMAGE SIGNAL  │
     └─────────────────────────────┘
                  │
                  ▼
     ┌─────────────────────────────┐
     │  DIVIDE ONE FRAME OF RECEIVED│
S220 │  IMAGE SIGNAL INTO FIRST AND │
     │   SECOND GROUP SUBFIELDS     │
     └─────────────────────────────┘
                  │
                  ▼
     ┌─────────────────────────────┐
S240 │  ESTIMATE MOTION VECTOR OF   │
     │    RECEIVED IMAGE SIGNAL     │
     └─────────────────────────────┘
                  │
                  ▼
     ┌─────────────────────────────┐
     │ MOVE THE PATTERN OF FIRST OR │
S260 │ SECOND GROUP SUBFIELDS BASED │
     │       ON MOTION VECTOR       │
     └─────────────────────────────┘
                  │
                  ▼
               ( END )
```

**EP 2 048 873 A1**

Europäisches Patentamt
European Patent Office
Office européen des brevets

# EUROPEAN SEARCH REPORT

Application Number

EP 08 16 2072

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 303 136 A (SONY CORP [JP]) 16 April 2003 (2003-04-16) | 1,2,4,5, 7-10,12, 13,15 | INV. H04N5/21 H04N5/44 H04N7/01 |
| Y | * abstract; figures 1,2,7-9,11,19,21 * <br><br> * column 3, paragraph 21 * <br> * column 6, paragraph 27 * <br> * column 8, paragraph 40 * <br> * column 10, paragraph 57 - column 11, paragraph 60 * <br> * column 12, paragraph 73 - column 13, paragraph 75 * <br> ----- | 3,6,11, 14 | |
| X | US 2004/179030 A1 (COLE JAMES R [US] ET AL) 16 September 2004 (2004-09-16) <br> * abstract; figures 1,2 * <br> * page 1, paragraph 7 - page 3, paragraph 40 * <br> ----- | 1 | |
| Y | US 2001/012075 A1 (CORREA CARLOS [DE] ET AL) 9 August 2001 (2001-08-09) <br> * abstract; figures 3,6,8 * <br> * page 3, paragraph 35 - page 3, paragraph 43 * <br> ----- | 3,11 | **TECHNICAL FIELDS SEARCHED (IPC)**<br><br>H04N |
| Y | EP 1 351 494 A (SONY CORP [JP]) 8 October 2003 (2003-10-08) <br> * the whole document * <br> ----- | 6,14 | |

The present search report has been drawn up for all claims

| Place of search | Date of completion of the search | Examiner |
|---|---|---|
| Munich | 22 January 2009 | Dolezel, Tomás |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

11

**ANNEX TO THE EUROPEAN SEARCH REPORT
ON EUROPEAN PATENT APPLICATION NO.**

EP 08 16 2072

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2009

| Patent document cited in search report | | Publication date | Patent family member(s) | | Publication date |
|---|---|---|---|---|---|
| EP 1303136 | A | 16-04-2003 | CN | 1424856 A | 18-06-2003 |
| | | | DE | 60208292 T2 | 07-09-2006 |
| | | | JP | 3855761 B2 | 13-12-2006 |
| | | | JP | 2003189257 A | 04-07-2003 |
| | | | KR | 20030030911 A | 18-04-2003 |
| | | | US | 2003107672 A1 | 12-06-2003 |
| US 2004179030 | A1 | 16-09-2004 | CN | 1530882 A | 22-09-2004 |
| | | | EP | 1457957 A1 | 15-09-2004 |
| | | | JP | 2004274770 A | 30-09-2004 |
| | | | KR | 20040081332 A | 21-09-2004 |
| | | | SG | 115606 A1 | 28-10-2005 |
| | | | US | 2005259122 A1 | 24-11-2005 |
| US 2001012075 | A1 | 09-08-2001 | NONE | | |
| EP 1351494 | A | 08-10-2003 | JP | 2003299040 A | 17-10-2003 |
| | | | US | 2003227973 A1 | 11-12-2003 |

For more details about this annex : see Official Journal of the European Patent Office, No. 12/82